# EUROPÄISCHE PATENTSCHRIFT

(11) **EP 3 625 864 B1**
(45) Veröffentlichungstag und Bekanntmachung des Hinweises auf die Patenterteilung: **02.03.2022**
(21) Anmeldenummer: 18717510.4
(22) Anmeldetag: 12.04.2018
(51) Int. Cl.: H02J 3/30, H02P 29/10, H02P 29/00

(54) **VERFAHREN ZUM BETREIBEN EINES ANTRIEBSSYSTEMS UND ANTRIEBSSYSTEM ZUR DURCHFÜHRUNG EINES SOLCHEN VERFAHRENS**
METHOD FOR OPERATING A DRIVE SYSTEM AND DRIVE SYSTEM FOR CARRYING OUT SUCH A METHOD
PROCÉDÉ DE FONCTIONNEMENT D'UN SYSTÈME D'ENTRAÎNEMENT ET SYSTÈME D'ENTRAÎNEMENT POUR LA MISE EN OEUVRE D'UN TEL PROCÉDÉ

(30) Priorität: 15.05.2017 DE 102017004621
(43) Veröffentlichungstag der Anmeldung: 25.03.2020
(73) Patentinhaber: SEW-EURODRIVE GmbH & Co. KG, 76646 Bruchsal (DE)
(72) Erfinder: SCHMIDT, Josef, 76676 Graben-Neudorf (DE); ZÖLLER, Thomas, 76646 Bruchsal (DE); SCHÄFER, Jens, 76676 Graben-Neudorf (DE); HAUCK, Matthias, 68723 Schwetzingen (DE)
(86) Internationale Anmeldenummer: PCT/EP2018/025115
(87) Internationale Veröffentlichungsnummer: WO 2018/210454

(56) Entgegenhaltungen:
- EP-A1- 2 525 481
- EP-A1- 2 713 465
- DE-A1- 10 150 347
- DE-B3-102006 022 706

## Beschreibung

Die Erfindung betrifft ein Verfahren zum Betreiben eines Antriebssystems und Antriebssystem zur Durchführung eines solchen Verfahrens.

Umrichtergespeiste Elektromotoren sind allgemein bekannt.

Aus der EP 2 819 271 A1 ist ein Energiespeichermodul mit Gleichspannungszwischenkreis bekannt.

Aus der EP 2 525 481 A1 ist eine Steuereinrichtung für einen Zwischenkreisumrichter bekannt.

Aus der DE 101 50 347 A1 ist ein schwerer Lüfter für Drehstrommotoren in Anlagen zur Personenbeförderung bekannt.

Aus der EP 2 525 481 A ist als nächstliegender Stand der Technik eine Steuereinrichtung für einen Zwischenkreisumrichter bekannt.

Aus der DE 10 2006 022 706 B3 ist eine Regelungsverfahren für ein elektrisch angetriebenes Fahrzeug.

Aus der DE 101 50 347 A1 ist ein schwerer Lüfter für Drehstrommotoren in Anlagen zur Personenbeförderung bekannt.

Aus der EP 2 713 465 A1 ist ein Energiespeichermodul mit Gleichspannungszwischenkreis bekannt.

Der Erfindung liegt daher die Aufgabe zugrunde, ein Antriebssystem möglichst selbstversorgend weiterzubilden, insbesondere also derart, dass möglichst wenig Leistung und diese möglichst gleichmäßig vom Wechselspannungsversorgungsnetz zugeführt wird.

Erfindungsgemäß wird die Aufgabe bei dem Verfahren nach den in Anspruch 1 und bei dem Antriebssystem nach den in Anspruch 12 angegebenen Merkmalen gelöst.

Wichtige Merkmale der Erfindung bei dem Verfahren zum Betreiben eines Antriebssystems sind, dass das Antriebssystem einen Gleichrichter, einen mit dem gleichspannungsseitigen Anschluss des Gleichrichters über einen DC/AC-Wandler, insbesondere einen bidirektional betreibbaren DC/AC-Wandler, verbundenen ersten Elektromotor und einen aus einem Wechselrichter speisbaren weiteren Motor aufweist,
insbesondere wobei der gleichspannungsseitige Anschluss des Wechselrichters und der gleichspannungsseitige Anschluss des DC/AC-Wandlers parallel geschaltet sind zum gleichspannungsseitigen Anschluss des Gleichrichters,
insbesondere wobei der wechselspannungsseitige Anschluss des Wechselrichters mit dem weiteren Motor verbunden ist und der wechselspannungsseitige Anschluss des AC/DC-Wandlers mit dem ersten Motor verbunden ist, dadurch gekennzeichnet, dass
der Wert der am gleichspannungsseitige Anschluss des Wechselrichters anliegenden Spannung, also Zwischenkreisspannung U_ZK, insbesondere innerhalb des Wandlers, insbesondere innerhalb des Gehäuses des Wandlers und somit außerhalb des Gehäuses des Wechselrichters, erfasst wird,
wobei der Wandler in insbesondere bloßer Abhängigkeit des Wertes den vom ersten Motor abgegebenen Leistungsfluss steuert, indem das Drehmoment des ersten Motors auf einen Drehmoment-Sollwert M_Soll hin geregelt wird,
wobei stets einer von zwei oder mehr, insbesondere unterschiedlichen, Zuständen des Antriebssystems aktiviert wird,
wobei der Wandler zwei oder mehr Strukturen aufweist, durch welche jeweils ein Drehmoment-Sollwert M_Soll bereit stellbar ist,
wobei abhängig vom aktivierten Zustand eine einzige der Strukturen den Drehmoment-Sollwert M_Soll bereitstellt.

Von Vorteil ist dabei, dass der erste Motor abhängig von der Zwischenkreisspannung gesteuert wird. Wenn also die Zwischenkreisspannung hoch ist, weil der weitere Motor generatorisch betrieben wird und Energie dem Zwischenkreis zuführt, wird der erste Motor motorisch betrieben, um Energie als rotatorische Energieform zu speichern und somit eine Rückspeisung ins Wechselspannungsversorgungsnetz unnötig zu machen. Sinkt die Zwischenkreisspannung wegen motorischen Betriebs des weiteren Motors ab, wird der erste Motor generatorisch betrieben und somit die rotatorisch gespeicherte Energie dem Zwischenkreis zur Verfügung gestellt, so dass die Entnahme von elektrischer Leistung aus dem Wechselspannungsversorgungsnetz verhinderbar oder zumindest verminderbar ist.

Somit weist das Antriebssystem verschiedene Betriebszustände, also Zustände, auf.

Erfindungsgemäß wird das Drehmoment des ersten Motors auf ein Soll-Drehmoment hingeregelt. Allerdings wird das Soll-Drehmoment abhängig vom jeweiligen Zustand auf unterschiedliche Weise erzeugt. Hierzu wird mittels eines Auswahlmittels eine jeweilige Struktur aktiviert, welche das Soll-Drehmoment erzeugt. Die jeweiligen Strukturen sind unterschiedlich. Beispielsweise weisen sie ein lineare Reglerstruktur auf oder nur ein Proportionalglied.

Bei der Ausgestaltung weist eine erste der Strukturen eine lineare Reglerstruktur, insbesondere PI-Regler, auf, durch welche ausgangsseitig der Drehmoment-Sollwert M_Soll bereit stellbar ist und welcher eingangsseitig die Differenz aus einem Sollwert und einem bestimmten Wert zugeführt wird, wobei der bestimmte Wert aus dem zeitlichen Verlauf der Zwischenkreisspannung U_ZK gebildet wird,
insbesondere als Funktional des zeitlichen Verlaufs der Zwischenkreisspannung,
insbesondere wobei der bestimmte Wert
   - entweder als der gleitende Mittelwert, insbesondere der gleitende arithmetische Mittelwert, des zeitlichen Verlaufs der Zwischenkreisspannung U_ZK bestimmt wird und der Sollwert eine Sollspannung U_ZK_Soll ist
   - oder als mittlere Schwankungsbreite des zeitlichen Verlaufs der

Zwischenkreisspannung U_ZK bestimmt wird und der Sollwert ein Spannungswert ist, insbesondere
- wobei die mittlere Schwankungsbreite als Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK
- oder wobei die mittlere Schwankungsbreite als gleitender insbesondere arithmetischer Mittelwert des Betrags der Differenz zwischen dem zeitlichen Verlauf der Zwischenkreisspannung U_ZK und dem gleitenden insbesondere arithmetischen

Mittelwert des zeitlichen Verlaufs der Zwischenkreisspannung U_ZK gebildet wird. Von Vorteil ist dabei, dass die Schwankungsbreite der Zwischenkreisspannung auf den Spannungswert als Sollwert hin geregelt wird oder die Zwischenkreisspannung auf die Sollspannung U_ZK_Soll als Sollwert hin geregelt wird.

Bei der Ausgestaltung weist eine zweite der Strukturen ein Proportionalglied auf, dem eingangsseitig der Quotient aus einem Parameter P_Vorgabe und einer mittels eines Sensors erfassten Istdrehzahl (Ω_SMS) der Welle des ersten Motors zugeführt wird, wobei das Proportionalglied ausgangsseitig ein Soll-Drehmoment bereit stellt. Von Vorteil ist dabei, dass die erfasste Drehzahl eingangsseitig verwendet wird, also nicht die Zwischenkreisspannung verwendet werden muss, und somit das Drehmoment auf das Soll-Drehmoment hin geregelt wird. Dabei ist die zweite Struktur nur in gewissen Zuständen aktiviert, nämlich einem vierten und in einem fünften Zustand.

Bei der Ausgestaltung weist eine dritte der Strukturen eine lineare Reglerstruktur, insbesondere PI-Regler, auf, welcher eingangsseitig die Differenz aus der mittleren Drehzahlwert n_mittel der Rotorwelle des ersten Motors und dem erfassten Istwert der Drehzahl zugeführt wird,
wobei die lineare Reglerstruktur ausgangsseitig ein Soll-Drehmoment bereit stellt. Von Vorteil ist dabei, dass wiederum keine Zwischenkreisspannung zur Regelung verwendet wird sondern die erfasste Drehzahl, um daraus ein Soll-Drehmoment bestimmt wird, auf welches das Ist-Drehmoment hingeregelt wird. Dabei ist die dritte Struktur nur in einem der Zustände aktiviert, nämlich einem dritten Zustand.

Bei einer vorteilhaften Ausgestaltung wird im ersten Zustand Z1 die erste Struktur aktiviert, wobei der linearen Reglerstruktur der ersten Struktur eingangsseitig die Differenz aus einer Sollspannung U_ZK_Soll und einem bestimmten Wert zugeführt wird, wobei der bestimmte Wert der gleitende insbesondere arithmetische Mittelwert des zeitlichen Verlaufs der Zwischenkreisspannung U_ZK ist. U_ZK_Soll ist in diesem Fall ein gewünschter Wert für den gleitenden arithmetischen Mittelwert, der höher liegt als der Gleichrichtwert der Netzspannung. Von Vorteil ist dabei, dass Zustandsabhängig eine jeweils geeignete Struktur aktivierbar ist. Im ersten Zustand wird also ein Begrenzen der Zwischenkreisspannung ausgeführt.

Bei einer vorteilhaften Ausgestaltung wird im zweiten Zustand Z2 die erste Struktur aktiviert, wobei der linearen Reglerstruktur der ersten Struktur eingangsseitig die Differenz aus einer Sollspannung U_ZK_Soll und einem bestimmten Wert zugeführt wird, wobei der bestimmte Wert
- entweder der gleitende insbesondere arithmetische Mittelwert des zeitlichen Verlaufs der Zwischenkreisspannung ist und U_ZK_Soll in diesem Fall ein Mindestwert für den gleitenden arithmetischen Mittelwert ist, der niedriger liegt als der Gleichrichtwert der Netzspannung
- oder der mittleren Schwankungsbreite, insbesondere also der Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK ist. und U_ZK_Soll in diesem Fall ein Maximalwert für diese mittlere Schwankungsbreite ist.

Von Vorteil ist dabei, dass im zweiten Zustand ein Stützen der Zwischenkreisspannung ausgeführt wird.

Bei einer vorteilhaften Ausgestaltung wird im dritten Zustand Z3 die dritte Struktur aktiviert,
wobei dem linearen Reglerglied der dritten Struktur eingangsseitig die Differenz aus dem erfassten Istwert der Drehzahl der Rotorwelle des ersten Motors 1 und einem mittleren Drehzahlwert n_mittel zugeführt wird,
insbesondere wobei der mittlere Drehzahlwert n_mittel als gleitender insbesondere arithmetischer Mittelwert der erfassten Drehzahl der Rotorwelle des Elektromotors 1 bestimmt wird. Von Vorteil ist dabei, dass ein Ruhezustand realisierbar ist, also keine Entnahme von Leistung aus dem ersten Motor, also aus dem Schwungmassenspeicher, erfolgt.

Bei einer vorteilhaften Ausgestaltung wird im vierten Zustand Z4 die zweite Struktur 22 aktiviert,
wobei dem Proportionalglied der zweiten Struktur eingangsseitig der Quotient aus einem Parameter P_Entlade und einer insbesondere mittels eines Sensors erfassten Istdrehzahl (Ω_SMS) der Welle des ersten Motors zugeführt wird. Von Vorteil ist dabei, dass ein geregeltes Entladen des Schwungmassenspeichers ausführbar ist.

Bei einer vorteilhaften Ausgestaltung wird im fünften Zustand Z5 die zweite Struktur 22 aktiviert,
wobei dem Proportionalglied der zweiten Struktur eingangsseitig der Quotient aus einem Parameter P_Auflade und einer insbesondere mittels eines Sensors erfassten Istdrehzahl (Ω_SMS) der Welle des ersten Motors zugeführt wird,
insbesondere wobei der Wert P_Auflade unterschiedlich ist vom Wert des Parameters P_Entlade. Von Vorteil ist dabei, dass ein geregeltes Aufladen des Schwungmassenspeichers ausführbar ist.

Bei einer vorteilhaften Ausgestaltung ist der wechselspannungsseitige Anschluss des Gleichrichters aus einem Wechselspannungsversorgungsnetz speisbar. Von Vorteil ist dabei, dass bei entleertem Schwungmassenspeicher trotzdem der Betrieb aufrecht erhaltbar ist.

Bei einer vorteilhaften Ausgestaltung wird die Drehzahl der Rotorwelle des Motors mittels eines Sensors erfasst. Von Vorteil ist dabei, dass die Drehzahl zur Regelung verwendbar ist.

Wichtige Merkmale bei dem Antriebssystem zur Durchführung eines vorgenannten Verfahrens sind, dass der erste Motor als Schwungmassenspeicher ausgeführt ist und der weitere Motor vom Wechselrichter speisbar ist.

Von Vorteil ist dabei, dass der Wechselrichter vom Schwungmassenspeicher speisbar ist, so dass aus dem Wechselspannungsversorgungsnetz möglichst wenig Leistung zuzuführen ist,
wobei der erste Motor über einen Wandler mit dem gleichspannungsseitigen Anschluss eines den weiteren Motor speisenden Wechselrichters verbunden ist,
wobei der Wandler ein Mittel zur Erfassung der am gleichspannungsseitigen Anschluss des Wandlers anliegenden Spannung aufweist,
wobei der Wandler einen Regler aufweist, welcher das Drehmoment des ersten Motors auf ein Soll-Drehmoment hin regelt,
wobei der Wandler ein Auswahlmittel zur Auswahl des Soll-Drehmoments aufweist.

Bei einer vorteilhaften Ausgestaltung treibt der erste Motor einen Lüfter an, insbesondere ein Lüfter der mit der Rotorwelle des ersten Motors drehfest verbunden ist,
wobei der Lüfter als Schwungmassenspeicher fungiert. Somit ist ein kompakter Aufbau erreichbar, da der Lüfter eine Doppelfunktion realisiert.

Bei einer vorteilhaften Ausgestaltung kühlt der vom Lüfter erzeugte Luftstrom den weiteren Motor. Von Vorteil dabei ist, dass bei generatorischem Betrieb des weiteren Motors der Luftstrom den weiteren Motor stärker entwärmt als bei motorischem Betrieb des weiteren Lüfters.

Weitere Vorteile ergeben sich aus den Unteransprüchen.

Der Schaltplan des Antriebssystems, ein Ausschnitt des Regelverfahrens und ein Zustandsablauf werden nun anhand von schematischen Abbildungen näher erläutert:

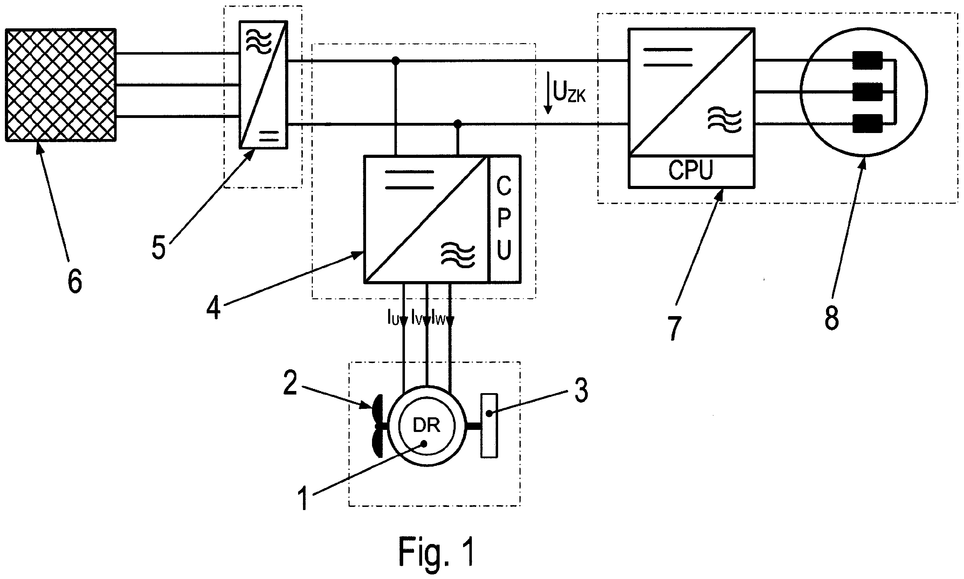

In der Figur 1 ist der Schaltplan eines erfindungsgemäßen Antriebssystems schematisch dargestellt.

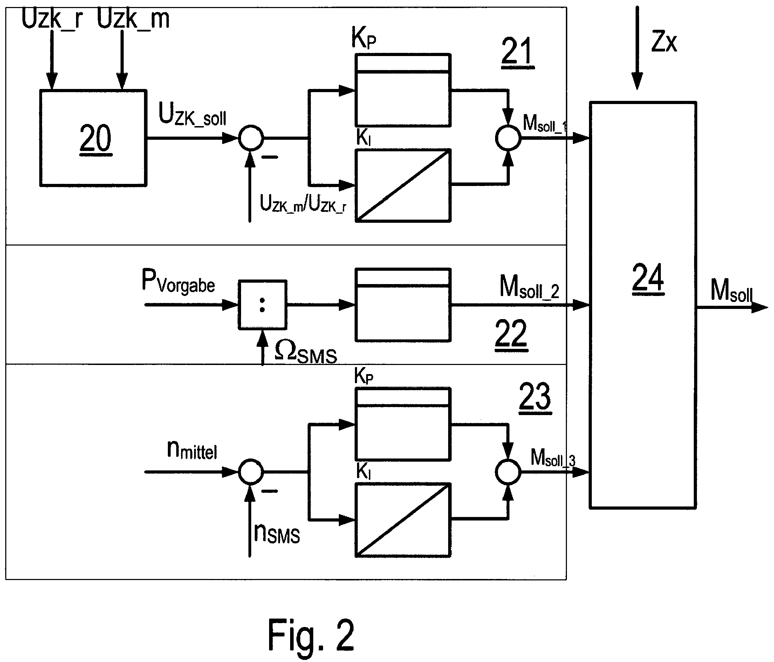

In der Figur 2 ist ein Ausschnitt eines erfindungsgemäßen Regelverfahrens schematisch dargestellt.

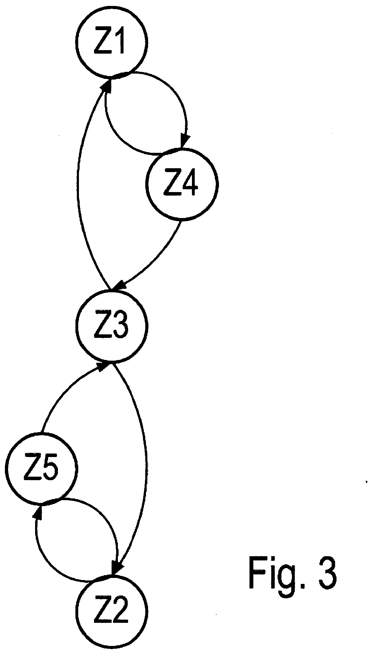

In der Figur 3 ist ein Zustandsablauf schematisch skizziert.

Wie in den Figuren dargestellt weist das Antriebssystem einen ersten Elektromotor 1 auf, wobei ein Lüfter 2 und/oder eine Schwungmasse 3 drehfest mit der Rotorwelle des Elektromotors 1 verbunden ist.

Der Elektromotor 1 wird von einem DC/AC-Wandler 4 versorgt, der bidirektional betreibbar ist. Somit wird bei generatorischem Betrieb des Elektromotors 1 am gleichspannungsseitigen Anschluss des DC-AC-Wandlers 4 Energie zugeführt und der Motor wird aus dem wechselspanungsseitigen Anschluss des Wandlers 4 versorgt. Der vom Wandler gesteuerte Leistungsfluss strömt also vom gleichspannungsseitigen zum wechselspannungsseitigen Anschluss des Wandlers 4.

Im generatorischem Betrieb des Motors 1 strömt der Leistungsfluss genau umgekehrt. Der Wandler 4 steuert dann also den Leistungsfluss, welcher vom Motor 1 am wechselspannungsseitigen Anschluss zugeführt und am gleichspannungsseitigen Anschluss des Wandlers herausgeführt wird.

Der Wandler stellt dem Motor 1 vorzugsweise ein Drehspannungssystem zur Verfügung.

Der gleichspannungsseitige Anschluss des Wandlers 4 ist mit dem gleichspannungsseitigen Anschluss eines Gleichrichters 5 verbunden, an dessen wechselspannungsseitigen Anschluss ein Wechselspannungsversorgungsnetz 6 angeschlossen ist. Außerdem ist mit dem gleichspannungsseitigen Anschluss des Wandlers 4 der gleichspannungsseitige Anschluss eines Wechselrichters 7 verbunden, aus dessen wechselspannungsseitigem Anschluss ein weiterer Elektromotor 8 gespeist wird. Der weitere Elektromotor 8 treibt eine Maschine, insbesondere ein Hubwerk, oder Anlage an und wird gemäß der dortigen Applikation betrieben. Hierbei ist zeitabschnittsweise ein motorischer oder ein generatorischer Betrieb vorgesehen.

Bei motorischer Betriebsweise des Weiteren Elektromotors 8 sinkt die am gleichspannungsseitigen Anschluss des Wechselrichters 7 anliegende Spannung U_ZK, insbesondere Zwischenkreisspannung, ab und bei einem Zwischenkreis mit beschränkter Kapazität insbesondere schlanken Zwischenkreis steigt die Welligkeit der Zwischenkreisspannung an.

Um möglichst wenig Leistung aus dem Wechselspannungsversorgungsnetz 6 über den Gleichrichter dem gleichspannungsseitigen Anschluss des Wechselrichters 7, insbesondere also dem Zwischenkreis, zuzuführen, wird Rotationsenergie der drehenden Rotorwelle des Motors 1 entnommen und somit elektrische Energie mittels des Wandlers 4 dem Zwischenkreis zugeführt.

Wichtig ist dabei, dass der Wandler 4 in bloßer Abhängigkeit des Wertes der erfassten Spannung, insbesondere Zwischenkreisspannung, U_ZK den vom Motor 1 zum Zwischenkreis strömenden Leistungsfluss steuert.

Weitere vom Wechselrichter 7 stammende Informationen zur Steuerung dieses Leistungsflusses sind nicht vorhanden.

Der Wandler 4 weist eine Signalelektronik auf, welche Ansteuersignale für Halbleiterschalter eines Leistungsteils erzeugt. Die Ansteuersignale sind vorzugsweise pulsweitenmoduliert.

Die Signalelektronik weist auch einen Regler auf, welcher das Ist-Drehmoment des Motors 1 auf einen Soll-Drehmoment M_Soll hin regelt.

Dieser Drehmoment-Sollwert M_Soll wird allerdings abhängig von vorgegebenen Zuständen (Z1, Z2, Z3, Z4, Z5) unterschiedlich erzeugt. Hierzu ist eine jeweilige Struktur (21, 22, 23) im Regler abhängig vom jeweils aktivierten Zustand ausgewählt. Ein Auswahlmittel 24 liefert also ausgangsseitig ein Soll-Drehmoment M_Soll, welches abhängig von einem Eingangssignal Z_x eines von den an den Eingängen des Auswahlmittels anliegenden Soll-Drehmomenten auswählt. Das Eingangssignal Z_x repräsentiert dabei den jeweils aktivierten Zustand.

Bei dem Regler ist bei einem ersten Zustand Z1 und bei einem zweiten Zustand Z2 eine erste Struktur 21 aktiviert. Bei einem dritten Zustand Z3 ist eine zweite Struktur 22 aktiviert. Bei einem vierten Zustand Z4 und bei einem fünften Zustand Z5 ist eine dritte Struktur 23 aktiviert.

Jede der Strukturen (21, 22, 23) liefert ausgangsseitig ein Soll-Drehmoment.

Dabei ist die dritte Struktur 23 als lineare Reglerstruktur, insbesondere PI-Regler, ausgeführt, dem eingangsseitig die Differenz aus dem mittleren Drehzahlwert n_mittel und dem Istwert n_SMS der Drehzahl der Rotorwelle des Motors 1 zugeführt wird. Ausgangsseitig erzeugt die lineare Reglerstruktur ein Soll-Drehmoment M_Soll_3.

Die zweite Struktur 22 ist als Proportionalglied ausgeführt, dem eingangsseitig der Quotient aus einem Parameter P_Vorgabe und der Istdrehzahl Ω_SMS, insbesondere also der mechanischen Drehzahl, zugeführt wird. Ausgangsseitig erzeugt das Proportionalglied ein Soll-Drehmoment M_Soll_2.

Die erste Struktur 21 ist als lineare Reglerstruktur, insbesondere PI-Regler, ausgeführt, welchem eingangsseitig die Differenz aus einem Sollwert U_ZK_Soll bzw. Sollspannungswert und einem bestimmten Wert zugeführt wird. Ausgangsseitig erzeugt die lineare Reglerstruktur ein Soll-Drehmoment M_Soll_1. Der bestimmte Wert ist aus dem zeitlichen Verlauf der Zwischenkreisspannung U_ZK gebildet, insbesondere als Funktional des zeitlichen Verlaufs der Zwischenkreisspannung. Hierbei ist der bestimmte Wert entweder der gleitende Mittelwert U_ZK_m, insbesondere der gleitende arithmetische Mittelwert, des zeitlichen Verlaufs der Zwischenkreisspannung U_ZK, wobei dann der Sollwert U_ZK_Soll ist, oder der bestimmte Wert ist als Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK bestimmt und dann mit U_ZK_r bezeichnet und der Sollwert ist dann ein Sollspannungswert.

Im ersten Zustand Z1 wird die erste Struktur 21 aktiviert und wird als Sollwert ein Maximalwert für den gleitenden insbesondere arithmetischen Mittelwert des zeitlichen Verlaufs der Zwischenkreisspannung U_ZK verwendet.

Im zweiten Zustand Z2 wird die erste Struktur 21 aktiviert und als Sollwert entweder ein Minimalwert des gleitenden insbesondere arithmetischen Mittelwerts des zeitlichen Verlaufs der Zwischenkreisspannung U_ZK verwendet, dann ist der bestimmte Wert der gleitende, arithmetische Mittelwert oder es wird ein maximaler Wert für die Welligkeit der Zwischenkreisspannung, also zum Beispiel die Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK vorgegeben, dann ist der bestimmt Wert eben die wie beschrieben ermittelte Welligkeit der Zwischenkreisspannung.

Die Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK wird hier auch als mittlere Schwankungsbreite bezeichnet.

Im dritten Zustand Z3 wird die dritte Struktur 23 aktiviert und als Sollwert eine mittlere Drehzahl vorgegeben und zum Beispiel der gleitende insbesondere arithmetische Mittelwert der erfassten Drehzahl der Rotorwelle des Elektromotors 1 als Istwert verwendet.

Im vierten Zustand Z4 wird die zweite Struktur 22 aktiviert und als Sollwert P_Soll der Wert eines Parameter P_Entlade vorgegeben.

Im fünften Zustand Z5 wird die zweite Struktur 22 aktiviert und als Sollwert P_Soll ein Parameter P_Auflade vorgegeben, dessen Wert vorzugsweise unterschiedlich ist vom Wert des Parameters P_Entlade.

Für eine jeweilige Zustandsänderung werden vom Auswahlmittel folgende Bedingungen auf Erfüllung überwacht.

Wenn der erfasste aktuelle Wert der Zwischenkreisspannung den Maximalwert des gleitenden insbesondere arithmetischen Mittelwerts des zeitlichen Verlaufs der Zwischenkreisspannung U_ZK überschreitet, wird vom dritten Zustand Z3, falls dieser aktuell aktiviert ist, in den ersten Zustand Z1 geschaltet.

Wenn die im generatorischen Betrieb vom ersten Motor 1 abgegebene Leistung P_SMS den Wert des Parameters P_Entlade übersteigt, wird vom ersten Zustand Z1 in den vierten Zustand Z4 geschaltet.

Wenn der aktuell bestimmte Wert der Zwischenkreisspannung den Maximalwert des gleitenden insbesondere arithmetischen Mittelwerts des zeitlichen Verlaufs der Zwischenkreisspannung U_ZK überschreitet, wird vom vierten Zustand Z4, falls dieser aktuell aktiviert ist, in den ersten Zustand Z1 geschaltet.

Wenn die Drehzahl des ersten Motors 1 kleiner ist als ein Wert, insbesondere als ein mittlerer Wert, oder wenn der aktuell bestimmte Wert der mittleren Schwankungsbreite größer ist als der gewünschte Maximalwert der mittleren Schwankungsbreite, wird vom vierten Zustand Z4, falls dieser aktuell aktiviert ist, in den dritten Zustand Z3 geschaltet.

Wenn der aktuell bestimmte Wert der mittleren Schwankungsbreite größer ist als der gewünschte Maximalwert der mittleren Schwankungsbreite, wird vom dritten Zustand Z3, falls dieser aktuell aktiviert ist, in den zweiten Zustand Z2 geschaltet.

Wenn die im generatorischen Betrieb vom ersten Motor 1 abgegebene Leistung P_SMS den Wert des Parameters P_Auflade unterschreitet, wird vom zweiten Zustand Z2 in den fünften Zustand Z5 geschaltet.

Wenn der aktuell bestimmte Wert der mittleren Schwankungsbreite größer ist als der gewünschte Maximalwert der mittleren Schwankungsbreite, wird vom fünften Zustand Z5, falls dieser aktuell aktiviert ist, in den zweiten Zustand Z2 geschaltet.

Wenn die Drehzahl des ersten Motors 1 größer ist als der Wert, insbesondere der mittlere Wert, oder wenn der aktuell bestimmte Wert der Zwischenkreisspannung den Maximalwert des gleitenden insbesondere arithmetischen Mittelwerts des zeitlichen Verlaufs der Zwischenkreisspannung U_ZK überschreitet, wird vom fünften Zustand Z5, falls dieser aktuell aktiviert ist, in den dritten Zustand Z3 geschaltet.

Bei weiteren erfindungsgemäßen Ausführungsbeispielen wird die mittlere Schwankungsbreite als gleitender insbesondere arithmetischer Mittelwert des Betrags der Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK bestimmt. Somit ist eine schnelle und einfache Berechnung ermöglicht, da nur der Betrag der Differenz gebildet und aufsummiert werden muss. Alternativ sind auch ähnliche Bestimmungen ausführbar, wie beispielsweise als quadratischer Mittelwert.

Bei weiteren erfindungsgemäßen Ausführungsbeispielen wird mittels eines überlagerten Reglers der mittlere Drehzahlwert n_mittel derart verändert, dass im ersten Zustand nicht ein oberer Schwellwert, insbesondere nicht eine obere Drehzahlgrenze, überschritten und im zweiten Zustand Z2 nicht ein unterer Schwellwert, insbesondere nicht eine untere Drehzahlgrenze, unterschritten wird. Dabei ist die Zeitkonstante der durch den überlagerten Regler bewirkten Regelung größer als die Zykluszeit der Applikation oder als die Zeitkonstante der Regelung des mit dem Soll-Drehmoment M_Soll beaufschlagten Reglers.

Bei weiteren erfindungsgemäßen Ausführungsbeispielen wird alternativ oder zusätzlich mittels eines überlagerten Reglers der Maximalwert des gleitenden insbesondere arithmetischen Mittelwerts zeitlichen Verlaufs der Zwischenkreisspannung U_ZK derart verändert, dass er einen möglichst kleinen Wert annimmt, aber der erste Motor einen Schwellwert, insbesondere einen unteren Drehzahlwert, nicht unterschreitet.

### Bezugszeichenliste

- 1: Elektromotor
- 2: Lüfter
- 3: zusätzliche Schwungmasse
- 4: bidirektionaler DC/AC-Wandler
- 5: Gleichrichter
- 6: Wechselspannungsversorgungsnetz
- 7: Wechselrichter
- 8: weiterer Elektromotor

- 20: Auswahl des Sollwerts
- 21: erste Struktur
- 22: zweite Struktur
- 23: dritte Struktur
- 24: Auswahlmittel zur Auswahl des Sollwertes des Drehmoments

- Z1: erster Zustand, insbesondere Begrenzen
- Z2: zweiter Zustand, insbesondere Stützen
- Z3: dritter Zustand, insbesondere Ruhezustand
- Z4: vierter Zustand, insbesondere Entladen
- Z5: fünfter Zustand, insbesondere Aufladen

- U_ZK_m: gleitender Mittelwert der Zwischenkreisspannung U_ZK
- U_ZK_r: gleitende Schwankungsbreite der Zwischenkreisspannung U_ZK
- P_Vorgabe: Parameter
- Ω_SMS: Istdrehzahl

## Patentansprüche

1. Verfahren zum Betreiben eines Antriebssystems, wobei das Antriebssystem einen Gleichrichter (5), einen mit dem gleichspannungsseitigen Anschluss des Gleichrichters (5) über einen einen bidirektional betreibbaren DC/AC-Wandler (4) verbundenen ersten Elektromotor (1) und einen aus einem Wechselrichter (7) speisbaren weiteren Motor aufweist, wobei der gleichspannungsseitige Anschluss des Wechselrichters (7) und der gleichspannungsseitige Anschluss des DC/AC-Wandlers (4) parallel geschaltet sind zum gleichspannungsseitigen Anschluss des Gleichrichters (5), wobei der wechselspannungsseitige Anschluss des Wechselrichters (7) mit dem weiteren Motor verbunden ist und der wechselspannungsseitige Anschluss des AC/DC-Wandlers mit dem ersten Motor verbunden ist, wobei der Wert oder **Verlauf** der am gleichspannungsseitigen Anschluss des Wechselrichters (7) anliegenden Spannung, also Zwischenkreisspannung U_ZK, insbesondere **innerhalb des** Wandlers, insbesondere innerhalb des Gehäuses des Wandlers und somit außerhalb des Gehäuses des Wechselrichters (7), erfasst wird **und daraus der Wert eines Maßes für Schwankungsbreite des Verlaufs bestimmt wird,** wobei der Wandler in insbesondere bloßer Abhängigkeit vom Wert oder dessen Verlauf den vom ersten Motor abgegebenen Leistungsfluss steuert, indem das Drehmoment des ersten Motors auf einen Drehmoment-Sollwert M_Soll hin geregelt wird, **dadurch gekennzeichnet,**
**dass** stets einer von zwei oder mehr unterschiedlichen Zuständen des Antriebssystems aktiviert wird, dass der Wandler zwei oder mehr Strukturen (21, 22, 23) aufweist, durch welche jeweils ein Drehmoment-Sollwert M_Soll bereit stellbar ist, dass abhängig vom aktivierten Zustand (Z1, Z2, Z3, Z4) eine einzige der Strukturen (21, 22 23) den Drehmoment-Sollwert M_Soll bereitstellt,
- **dass** in einer ersten Struktur (21) die am gleichspannungsseitigen Anschluss des bidirektionalen DC/AC-Wandlers (4) anliegende Spannung mittels einer linearen Reglerstruktur geregelt, und dabei ein Soll-Drehmoment bereitgestellt wird,
- **dass** einer weiteren (22, 23) die Drehzahl des ersten Motors mittels einer weiteren linearen Reglerstruktur geregelt wird und dabei ein Soll-Drehmoment bereitgestellt wird.

2. Verfahren nach Anspruch 1 **dadurch gekennzeichnet, dass** die erste Struktur (21) eine lineare Reglerstruktur, insbesondere PI-Regler, aufweist, durch welche ausgangsseitig den Drehmoment-Sollwert M_Soll bereit stellbar ist und welcher eingangsseitig die Differenz aus einem Sollwert und einem bestimmten Wert zugeführt wird, wobei der bestimmte Wert aus dem zeitlichen Verlauf der Zwischenkreisspannung U_ZK gebildet wird, insbesondere als Funktional des zeitlichen Verlaufs der Zwischenkreisspannung, insbesondere wobei
- entweder der bestimmte Wert als der gleitende Mittelwert, insbesondere der gleitende arithmetische Mittelwert, des zeitlichen Verlaufs der Zwischenkreisspannung U_ZK bestimmt wird und der Sollwert eine Sollspannung U_ZK_Soll ist
- oder der bestimmte Wert als mittlere Schwankungsbreite des zeitlichen Verlaufs der Zwischenkreisspannung U_ZK bestimmt wird und der Sollwert ein Sollspannungswert ist,
insbesondere
- wobei die mittlere Schwankungsbreite als Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK
- oder wobei die mittlere Schwankungsbreite als gleitender insbesondere arithmetischer Mittelwert des Betrags der Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK gebildet wird.

3. Verfahren **nach Anspruch 1,**
**dadurch gekennzeichnet, dass**
eine zweite der Strukturen (21, 22, 23) ein Proportionalglied aufweist, dem eingangsseitig der Quotient aus einem Parameter P_Vorgabe und einer mittels eines Sensors erfassten Istdrehzahl (Ω_SMS) der Welle des ersten Motors, insbesondere also der mechanischen Winkelgeschwindigkeit der Welle des ersten Motors, zugeführt wird,
wobei das Proportionalglied ausgangsseitig ein Soll-Drehmoment bereit stellt.

4. Verfahren nach mindestens einem der vorangegangenen Ansprüche,
**dadurch gekennzeichnet, dass**
eine dritte der Strukturen (21, 22, 23) eine lineare Reglerstruktur, insbesondere PI-Regler, aufweist, welcher eingangsseitig die Differenz aus der mittleren Drehzahlwert n_mittel und dem erfassten Istwert der Drehzahl der Rotorwelle des ersten Motors und zugeführt wird, wobei die lineare Reglerstruktur ausgangsseitig ein Soll-Drehmoment bereit stellt.

5. Verfahren nach mindestens einem der vorangegangenen Ansprüche,
**dadurch gekennzeichnet, dass**
im ersten Zustand Z1 die erste Struktur (21) aktiviert wird,
wobei der linearen Reglerstruktur der ersten Struktur (21) eingangsseitig die Differenz aus einem Sollwert und einem bestimmten Wert zugeführt wird, wobei der bestimmte Wert ein Maximalwert für den gleitenden insbesondere arithmetischen Mittelwert des zeitlichen Verlaufs der Zwischenkreisspannung U_ZK ist.

6. Verfahren nach mindestens einem der vorangegangenen Ansprüche,
**dadurch gekennzeichnet, dass**
im zweiten Zustand Z2 die erste Struktur (21) aktiviert wird
wobei der linearen Reglerstruktur der ersten Struktur (21) eingangsseitig die Differenz aus einem Sollwert, insbesondere einer Sollspannung U_ZK_Soll oder einem Sollspannungswert, und einem bestimmten Wert zugeführt wird, wobei der bestimmte Wert
- entweder der gleitende insbesondere arithmetische Mittelwert U_ZK_m des zeitlichen Verlaufs der Zwischenkreisspannung ist und U_ZK_Soll in diesem Fall ein Mindestwert für den gleitenden arithmetischen Mittelwert U_ZK_m ist, der niedriger liegt als der Gleichrichtwert der Netzspannung
- oder die mittlere Schwankungsbreite U_ZK_r, insbesondere also der Wurzel aus dem gleitenden insbesondere arithmetischen Mittelwert der quadrierten Differenz zwischen dem zeitlichen Verlauf der Zwischenkreisspannung U_ZK und dem gleitenden insbesondere arithmetischen Mittelwert des zeitlichen Verlaufs der Zwischenkreisspannung U_ZK, ist und U_ZK_Soll in diesem Fall ein Maximalwert für diese mittlere Schwankungsbreite U_ZK_r ist.

7. Verfahren nach mindestens einem der vorangegangenen Ansprüche,
**dadurch gekennzeichnet, dass**
im dritten Zustand Z3 die dritte Struktur (23) aktiviert wird,
wobei dem linearen Reglerglied der dritten Struktur eingangsseitig die Differenz aus einem mittleren Drehzahlwert n_mittel und dem erfassten Istwert der Drehzahl der Rotorwelle des ersten Motors 1 zugeführt wird,
insbesondere wobei der mittlere Drehzahlwert n_mittel als gleitender insbesondere arithmetischer Mittelwert der erfassten Drehzahl der Rotorwelle des Elektromotors (1) bestimmt wird.

8. Verfahren nach mindestens einem der vorangegangenen Ansprüche,
**dadurch gekennzeichnet, dass**
im vierten Zustand Z4 die zweite Struktur (22) aktiviert wird,
wobei dem Proportionalglied der zweiten Struktur eingangsseitig der Quotient aus einem Parameter P_Entlade und einer mittels eines Sensors erfassten Istdrehzahl (Ω_SMS) der Welle des ersten Motors zugeführt wird.

9. Verfahren nach mindestens einem der vorangegangenen Ansprüche,
**dadurch gekennzeichnet, dass**
im fünften Zustand Z5 die zweite Struktur (22) aktiviert wird,
wobei dem Proportionalglied der zweiten Struktur eingangsseitig der Quotient aus einem Parameter P_Auflade und einer mittels eines Sensors erfassten Istdrehzahl (Ω_SMS) der Welle des ersten Motors, insbesondere also der mechanischen Winkelgeschwindigkeit der Welle des ersten Motors, zugeführt wird,
insbesondere wobei der Wert P_Auflade unterschiedlich ist vom Wert des Parameters P_Entlade.

10. Verfahren nach mindestens einem der vorangegangenen Ansprüche,
**dadurch gekennzeichnet, dass**
der wechselspannungsseitige Anschluss des Gleichrichters (5) aus einem Wechselspannungsversorgungsnetz (6) speisbar ist.

11. Verfahren nach mindestens einem der vorangegangenen Ansprüche,
**dadurch gekennzeichnet, dass**
die Drehzahl der Rotorwelle des Motors mittels eines Sensors erfasst wird.

12. Antriebssystem zur Durchführung eines Verfahrens nach mindestens einem der vorangegangenen Ansprüche, Z wobei Z der erste Motor als Schwungmassenspeicher ausgeführt ist und der weitere Motor vom Wechselrichter (7) speisbar ist, wobei der erste Motor über einen **bidirektionalen DC/AC-Wandler (4)** mit dem gleichspannungsseitigen Anschluss eines den weiteren Motor speisenden Wechselrichters (7) verbunden ist, wobei der Wandler ein Mittel zur Erfassung der am gleichspannungsseitigen Anschluss des Wandlers anliegenden Spannung aufweist, wobei der Wandler einen Regler aufweist, welcher das Drehmoment des ersten Motors auf ein Soll-Drehmoment hin regelt, Z **dadurch gekennzeichnet,**
**dass**
der Wandler ein Auswahlmittel zur Auswahl (20) des Soll-Drehmoments aufweist, dass der Wandler zwei oder mehr Strukturen (21, 22, 23) aufweist, durch welche jeweils ein Drehmoment-Sollwert M_Soll bereit stellbar ist, dass abhängig vom aktivierten Zustand (Z1, Z2, Z3, Z4) eine einzige der Strukturen (21, 22, 23) den Drehmoment-Sollwert M_Soll bereitstellt,
- **dass** in einer ersten Struktur (21) die am gleichspannungsseitigen Anschluss des bidirektionalen DC/AC-Wandlers (4) anliegende Spannung mittels einer linearen Reglerstruktur geregelt, und dabei ein Soll-Drehmoment bereitgestellt wird,
- **dass** einer weiteren Struktur (22, 23) die Drehzahl des ersten Motors mittels einer weiteren linearen Reglerstruktur geregelt wird und dabei ein Soll-Drehmoment bereitgestellt wird.

13. Antriebssystem **nach Anspruch 12,**
**dadurch gekennzeichnet, dass**
der erste Motor einen Lüfter (2) antreibt, insbesondere ein Lüfter (2) mit der Rotorwelle des ersten Motors drehfest verbunden ist,
wobei der Lüfter (2) als Schwungmassenspeicher fungiert.

14. Antriebssystem **nach Anspruch 12 oder 13,**
**dadurch gekennzeichnet, dass**
der vom Lüfter (2) erzeugte Luftstrom den weiteren Motor kühlt,
insbesondere so dass bei generatorischem Betrieb des weiteren Motors der Luftstrom den weiteren Motor stärker entwärmt als bei motorischem Betrieb des weiteren Lüfters (2).

## Claims

1. Method for operating a drive system,
the drive system comprising a rectifier (5), a first electric motor (1), which is connected to the DC voltage-side terminal of the rectifier (5) by means of a bidirectionally operable DC-to-AC converter (4), and a further motor that can be fed from an inverter (7),
the DC voltage-side terminal of the inverter (7) and the DC voltage-side terminal of the DC-to-AC converter (4) being connected in parallel with the DC voltage-side terminal of the rectifier (5),
the AC voltage-side terminal of the inverter (7) being connected to the further motor, and the AC voltage-side terminal of the AC-to-DC converter being connected to the first motor,
the value or curve of the voltage applied to the DC voltage-side terminal of the inverter (7), i.e. the DC-link voltage U_ZK, being detected in particular within the converter, in particular within the casing of the converter and thus outside the casing of the inverter (7), and the value of a measure for the fluctuation range of the curve being determined therefrom,
the converter controlling the power flow delivered by the first motor depending on, in particular depending only on, the value or the curve thereof, by controlling the torque of the first motor towards a desired torque value M_Soll,
**characterised in that**
one of two or more different states of the drive system is always activated,
**in that** the converter has two or more structures (21, 22, 23) by each of which a desired torque value M_Soll can be provided,
**in that**, depending on the activated state (Z1, Z2, Z3, Z4), only one of the structures (21, 22, 23) provides the desired torque value M_Soll,
**in that**, in a first structure (21), the voltage applied to the DC voltage-side terminal of the bidirectional DC-to-AC converter (4) is controlled by means of a linear controller structure, and a desired torque is provided in the process,
**in that**, in a further structure (22, 23), the speed of the first motor is controlled by means of a further linear controller structure, and a desired torque is provided in the process.

2. Method according to claim 1,
**characterised in that**
the first structure (21) has a linear controller structure, in particular PI controllers, by which the desired torque value M_Soll can be provided at the output, and to the input of which the difference between a desired value and a determined value is supplied,
the determined value being formed from the time curve of the DC-link voltage U_ZK,
in particular as a functional of the time curve of the DC-link voltage,
in particular
- either the determined value being determined as the moving average, in particular the arithmetic moving average, of the time curve of the DC-link voltage U_ZK, and the desired value being a desired voltage U_ZK_Soll
- or the determined value being determined as the average fluctuation range of the time curve of the DC-link voltage U_ZK, and the desired value being a desired voltage value,
in particular
- the average fluctuation range being formed as the root of the moving, in particular arithmetic, average of the square of the difference between the time curve of the DC-link voltage U_ZK and the moving, in particular arithmetic, average of the time curve of the DC-link voltage U_ZK,
- or the average fluctuation range being formed as the moving, in particular arithmetic, average of the amount of the difference between the time curve of the DC-link voltage U_ZK and the moving, in particular arithmetic, average of the time curve of the DC-link voltage U_ZK.

3. Method according to claim 1,
**characterised in that**
a second of the structures (21, 22, 23) has a proportional control element, to the input of which the quotient of a parameter P_Vorgabe and an actual speed (Ω_SMS), detected by means of a sensor, of the shaft of the first motor, in particular therefore the mechanical angular velocity of the shaft of the first motor, is supplied,
the proportional control element providing a desired torque at its output.

4. Method according to at least one of the preceding claims,
**characterised in that**
a third of the structures (21, 22, 23) has a linear controller structure, in particular PI controllers, to the input of which the difference between the average speed value n_mittel and the detected actual value of the speed of the rotor shaft of the first motor is supplied, the linear controller structure providing a desired torque at its output.

5. Method according to at least one of the preceding claims,
**characterised in that**
the first structure (21) is activated in the first state Z1,
the difference between a desired value and a determined value being supplied to the input of the linear controller structure of the first structure (21), the determined value being a maximum value of the moving, in particular arithmetic, average of the time curve of the DC-link voltage U_ZK.

6. Method according to at least one of the preceding claims,
**characterised in that**
the first structure (21) is activated in the second state Z2,
the difference between a desired value, in particular a desired voltage U_ZK_Soll or a desired voltage value, and a determined value being supplied to the input of the linear controller structure of the first structure (21), the determined value being
- either the moving, in particular arithmetic, average U_ZK_m of the time curve of the DC-link voltage, with U_ZK_Soll in this case being a minimum value for the arithmetic moving average U_ZK_m, which is lower than the rectified value of the grid voltage
- or the average fluctuation range U_ZK_r, in particular therefore the root of the moving, in particular arithmetic, average of the square of the difference between the time curve of the DC-link voltage U_ZK and the moving, in particular arithmetic, average of the time curve of the DC-link voltage U_ZK, with U_ZK_Soll in this case being a maximum value for said average fluctuation range U_ZK_r.

7. Method according to at least one of the preceding claims,
**characterised in that**
the third structure (23) is activated in the third state Z3,
the difference between an average speed value n_mittel and the detected actual value of the speed of the rotor shaft of the first motor 1 being supplied to the input of the linear controller element of the third structure,
the average speed value n_mittel in particular being determined as the moving, in particular arithmetic, average of the detected speed of the rotor shaft of the electric motor (1).

8. Method according to at least one of the preceding claims,
**characterised in that**
the second structure (22) is activated in the fourth state Z4,
the quotient of a parameter P_Entlade and an actual speed (Ω_SMS), detected by means of a sensor, of the shaft of the first motor being supplied to the input of the proportional control element of the second structure.

9. Method according to at least one of the preceding claims,
**characterised in that**
the second structure (22) is activated in the fifth state Z5,
the quotient of a parameter P_Auflade and an actual speed (Ω_SMS), detected by means of a sensor, of the shaft of the first motor, in particular therefore the mechanical angular velocity of the shaft of the first motor, being supplied to the input of the proportional control element of the second structure,
the value P_Auflade in particular being different from the value of the parameter P_Entlade.

10. Method according to at least one of the preceding claims,
**characterised in that**
the AC voltage-side terminal of the rectifier (5) can be fed from an AC voltage supply grid (6).

11. Method according to at least one of the preceding claims,
**characterised in that**
the speed of the rotor shaft of the motor is detected by means of a sensor.

12. Drive system for carrying out a method according to at least one of the preceding claims,
the first motor being configured as a flywheel storage device, and the further motor being able to be fed from the inverter (7),
the first motor being connected, by means of a bidirectional DC-to-AC converter (4), to the DC voltage-side terminal of an inverter (7) that feeds the further motor,
the converter having a means for detecting the voltage applied to the DC voltage-side terminal of the converter,
the converter having a controller that controls the torque of the first motor towards a desired torque,
**characterised in that**
the converter has a selection means for selecting (20) the desired torque,
**in that** the converter has two or more structures (21, 22, 23) by each of which a desired torque value M_Soll can be provided,
**in that**, depending on the activated state (Z1, Z2, Z3, Z4), only one of the structures (21, 22, 23) provides the desired torque value M_Soll,
- **in that**, in a first structure (21), the voltage applied to the DC voltage-side terminal of the bidirectional DC-to-AC converter (4) is controlled by means of a linear controller structure, and a desired torque is provided in the process,
- **in that**, in a further structure (22, 23), the speed of the first motor is controlled by means of a further linear controller structure, and a desired torque is provided in the process.

13. Drive system according to claim 12,
**characterised in that**
the first motor drives a fan (2), in particular a fan (2) that is connected to the rotor shaft of the first motor for rotation therewith,
the fan (2) acting as a flywheel storage device.

14. Drive system according to either claim 12 or claim 13,
**characterised in that**
the air flow generated by the fan (2) cools the further motor,
in particular such that, when the further motor is operated in generator mode, the air flow cools the further motor more than when the further fan (2) is operated in motor mode.

## Revendications

1. Procédé d'actionnement d'un système d'entraînement,
lequel système d'entraînement comprend un redresseur (5), un premier moteur électrique (1) connecté au raccord dudit redresseur (5) situé côté tension continue, par l'intermédiaire d'un convertisseur CC/CA (4) actionnable en mode bidirectionnel, et un moteur additionnel pouvant être alimenté à partir d'un onduleur (7),
le raccord de l'onduleur (7) situé côté tension continue, et le raccord du convertisseur CC/CA (4) situé côté tension continue, étant branchés en parallèle avec le raccord du redresseur (5) situé côté tension continue,
le raccord dudit onduleur (7), situé côté tension alternative, étant connecté au moteur additionnel et le raccord du convertisseur CA/CC, situé côté tension alternative, étant connecté au premier moteur,
sachant que la valeur ou l'allure de la tension appliquée au raccord de l'onduleur (7) situé côté tension continue, c'est-à-dire d'une tension *U_ZK* de circuit intermédiaire, est notamment détectée à l'intérieur du convertisseur, en particulier à l'intérieur du boîtier dudit convertisseur, et donc à l'extérieur du boîtier dudit onduleur (7), et que la valeur d'un critère estimatif attribué à une marge de fluctuation de ladite allure est déterminée sur cette base,
sachant que ledit convertisseur commande notamment le flux de puissance, fourni par le premier moteur, purement et simplement en fonction de ladite valeur ou de l'allure de cette dernière, en régulant le couple de rotation dudit premier moteur sur une valeur de consigne *M_Soll* dudit couple de rotation,
**caractérisé par le fait**
**que** l'un de deux, ou de plus de deux états différents du système d'entraînement est activé en permanence ;
**que** le convertisseur comporte des structures (21, 22, 23) au nombre de deux ou plus, par l'intermédiaire desquelles une valeur de consigne *M_Soll* du couple de rotation peut être procurée à chaque fois ;
**qu'**une unique structure, au sein desdites structures (21, 22, 23), procure ladite valeur de consigne *M*_*Soll* du couple de rotation en fonction de l'état (Z1, Z2, Z3, Z4) activé ;
- **que**, dans une première structure (21), la tension appliquée au raccord du convertisseur bidirectionnel (4) CC/CA, situé côté tension continue, est régulée au moyen d'une structure régulatrice linéaire et un couple de rotation de consigne est alors procuré ;
- **que**, dans une structure autre (22, 23), la vitesse de rotation du premier moteur est régulée au moyen d'une structure régulatrice linéaire additionnelle et un couple de rotation de consigne est alors procuré.

2. Procédé la revendication 1,
**caractérisé par le fait que**
la première structure (21) est munie d'une structure régulatrice linéaire se présentant notamment comme un régulateur PI, par l'intermédiaire de laquelle la valeur de consigne *M_Soll* du couple de rotation peut être procurée, côté sortie, et à laquelle la différence entre une valeur de consigne et une valeur déterminée est délivrée côté entrée,
laquelle valeur déterminée est formée sur la base de l'allure temporelle de la tension *U_ZK* du circuit intermédiaire,
notamment en tant que fonctionnelle de ladite allure temporelle de la tension du circuit intermédiaire,
sachant, en particulier, que
- ladite valeur déterminée est déterminée sous la forme de la moyenne mobile, notamment de la moyenne mobile arithmétique de l'allure temporelle de la tension *U_ZK* du circuit intermédiaire, et la valeur de consigne est une tension de consigne *U_ZK_Soll*,
- ou bien ladite valeur déterminée est déterminée sous la forme de la marge de fluctuation moyenne de ladite allure temporelle de la tension *U ZK* du circuit intermédiaire, et la valeur de consigne est une valeur de tension de consigne,
sachant, en particulier,
- que ladite marge de fluctuation moyenne est formée en tant que racine de la moyenne mobile, notamment arithmétique, de la différence au carré entre l'allure temporelle de ladite tension *U_ZK* du circuit intermédiaire et la moyenne mobile, notamment arithmétique, de ladite allure temporelle de la tension *U ZK* du circuit intermédiaire,
- ou bien que ladite marge de fluctuation moyenne est formée en tant que moyenne mobile, notamment arithmétique, de la grandeur de la différence entre l'allure temporelle de la tension *U ZK* du circuit intermédiaire et la moyenne mobile, notamment arithmétique, de ladite allure temporelle de la tension *U ZK* du circuit intermédiaire.

3. Procédé la revendication 1,
**caractérisé par le fait**
**qu'**une deuxième structure, au sein des structures (21, 22, 23), est dotée d'un élément proportionnel auquel est délivré, côté entrée, le quotient d'un paramètre *P_Vorgabe* et d'une vitesse de rotation effective (Ω_SMS) de l'arbre du premier moteur, détectée au moyen d'un capteur, c'est-à-dire, en particulier de la vitesse angulaire mécanique dudit arbre du premier moteur,
lequel élément proportionnel procure un couple de rotation de consigne côté sortie.

4. Procédé selon au moins l'une des revendications précédentes,
**caractérisé par le fait**
**qu'**une troisième structure, au sein des structures (21, 22, 23), est munie d'une structure régulatrice linéaire se présentant notamment comme un régulateur PI et à laquelle est délivrée, côté entrée, la différence entre la valeur moyenne *n_mittel* de la vitesse de rotation et la valeur effective détectée de la vitesse de rotation de l'arbre rotorique du premier moteur,
laquelle structure régulatrice linéaire procure un couple de rotation de consigne côté sortie.

5. Procédé selon au moins l'une des revendications précédentes,
**caractérisé par le fait que**
la première structure (21) est activée dans le premier état Z1,
la différence entre une valeur de consigne et une valeur déterminée étant délivrée, côté entrée, à la structure régulatrice linéaire de ladite première structure (21), laquelle valeur déterminée est une valeur maximale attribuée à la moyenne mobile, notamment arithmétique, de l'allure temporelle de la tension *U_ZK* du circuit intermédiaire.

6. Procédé selon au moins l'une des revendications précédentes,
**caractérisé par le fait que**
la première structure (21) est activée dans le deuxième état Z2,
la différence entre une valeur de consigne, en particulier une tension de consigne *U*_*ZK*_*Soll* ou une valeur de tension de consigne, et une valeur déterminée, étant délivrée à la structure régulatrice linéaire de ladite première structure (21), côté entrée, sachant que ladite valeur déterminée
- est la moyenne mobile *U_ZK_m*, notamment arithmétique, de l'allure temporelle de la tension du circuit intermédiaire, *U_ZK_Soll* étant, dans ce cas, une valeur minimale qui est attribuée à ladite moyenne mobile arithmétique *U_ZK_m* et est moindre que la valeur redressée de la tension du réseau,
- ou bien la marge de fluctuation moyenne *U_ZK_r,* c'est-à-dire, en particulier, de la racine de la moyenne mobile, notamment arithmétique, de la différence au carré entre l'allure temporelle de la tension *U_ZK* du circuit intermédiaire et la moyenne mobile, notamment arithmétique, de ladite allure temporelle de la tension *U_ZK* du circuit intermédiaire, *U_ZK_Soll* étant, dans ce cas, une valeur maximale attribuée à cette marge de fluctuation moyenne *U_ZK_r.*

7. Procédé selon au moins l'une des revendications précédentes,
**caractérisé par le fait que**
la troisième structure (23) est activée dans le troisième état Z3,
la différence, entre une valeur moyenne *n_mittel* de la vitesse de rotation et la valeur effective détectée de la vitesse de rotation de l'arbre rotorique du premier moteur (1), étant délivrée à l'élément régulateur linéaire de ladite troisième structure, sachant, en particulier, que ladite valeur moyenne *n_mitte*/ de la vitesse de rotation est déterminée en tant que moyenne mobile, notamment arithmétique, de la vitesse de rotation détectée de l'arbre rotorique dudit moteur électrique (1).

8. Procédé selon au moins l'une des revendications précédentes,
**caractérisé par le fait que**
la deuxième structure (22) est activée dans le quatrième état Z4,
le quotient d'un paramètre *P_Entlade* et d'une vitesse de rotation effective (Ω_SMS) de l'arbre du premier moteur, détectée au moyen d'un capteur, étant délivré côté entrée à l'élément proportionnel de ladite deuxième structure.

9. Procédé selon au moins l'une des revendications précédentes,
**caractérisé par le fait que**
la deuxième structure (22) est activée dans le cinquième état Z5,
le quotient d'un paramètre *P_Auflade* et d'une vitesse de rotation effective (Ω_SMS) de l'arbre du premier moteur, détectée au moyen d'un capteur, c'est-à-dire, en particulier, de la vitesse angulaire mécanique dudit arbre du premier moteur, étant délivré côté entrée à l'élément proportionnel de ladite deuxième structure,
sachant notamment que la valeur *P_Auflade* diffère de la valeur du paramètre *P_Entlade.*

10. Procédé selon au moins l'une des revendications précédentes,
**caractérisé par le fait que**
le raccord du redresseur (5), situé côté tension alternative, peut être alimenté à partir d'un réseau (6) d'alimentation en tension alternative.

11. Procédé selon au moins l'une des revendications précédentes,
**caractérisé par le fait que**
la vitesse de rotation de l'arbre rotorique du moteur est détectée au moyen d'un capteur.

12. Système d'entraînement dévolu à la mise en œuvre d'un procédé conforme à au moins l'une des revendications précédentes,
le premier moteur étant réalisé sous la forme d'un accumulateur à masse d'inertie, et le moteur additionnel pouvant être alimenté par l'onduleur (7),
sachant que ledit premier moteur est connecté, par l'intermédiaire d'un convertisseur bidirectionnel (4) CC/CA, au raccord situé côté tension continue d'un onduleur (7) alimentant ledit moteur additionnel,
le convertisseur étant muni d'un moyen de détection de la tension appliquée au raccord dudit convertisseur situé côté tension continue,
le convertisseur étant équipé d'un régulateur qui régule le couple de rotation dudit premier moteur sur un couple de rotation de consigne,
**caractérisé par le fait**
**que** le convertisseur est doté d'un moyen sélecteur affecté à la sélection (20) du couple de rotation de consigne ;
**que** ledit convertisseur comporte des structures (21, 22, 23) au nombre de deux ou plus, par l'intermédiaire desquelles une valeur de consigne *M_Soll* du couple de rotation peut être procurée à chaque fois ;
**qu'**une unique structure, au sein desdites structures (21, 22, 23), procure ladite valeur de consigne *M_Soll* du couple de rotation en fonction de l'état (Z1, Z2, Z3, Z4) activé ;
**que**, dans une première structure (21), la tension appliquée au raccord du convertisseur bidirectionnel (4) CC/CA, situé côté tension continue, est régulée au moyen d'une structure régulatrice linéaire et un couple de rotation de consigne est alors procuré ;
**que**, dans une structure autre (22, 23), la vitesse de rotation du premier moteur est régulée au moyen d'une structure régulatrice linéaire additionnelle et un couple de rotation de consigne est alors procuré.

13. Système d'entraînement la revendication 12,
**caractérisé par le fait que**
le premier moteur entraîne un ventilateur (2), un ventilateur (2) étant notamment relié, avec verrouillage rotatif, à l'arbre rotorique dudit premier moteur,
lequel ventilateur (2) remplit la fonction d'un accumulateur à masse d'inertie.

14. Système d'entraînement la revendication 12 ou 13,
**caractérisé par le fait que**
le courant d'air engendré par le ventilateur (2) refroidit le moteur additionnel, notamment de façon telle que, lorsque le moteur additionnel fonctionne en mode générateur, le courant d'air élimine plus fortement la chaleur dudit moteur additionnel que lorsque le ventilateur additionnel (2) fonctionne en mode moteur.
